# EUROPÄISCHE PATENTSCHRIFT

(11) **EP 1 609 541 B1**
(45) Veröffentlichungstag und Bekanntmachung des Hinweises auf die Patenterteilung: **15.12.2010**
(21) Anmeldenummer: 05002020.5
(22) Anmeldetag: 01.02.2005
(51) Int. Cl.: B08B 15/02, G05D 7/06

(54) **Sicherheitswerkbank**
Safety workbench
Établi de sécurité

(30) Priorität: 24.06.2004 DE 102004032454
(43) Veröffentlichungstag der Anmeldung: 28.12.2005
(73) Patentinhaber: Thermo Electron LED GmbH, 63505 Langenselbold (DE)
(72) Erfinder: Ross, Gerd, 60388 Frankfurt (DE); Glück, Walter, 63594 Hasselroth (DE); Frickel, Edmund, 63584 Gründau (DE); Habrich, Jürgen, 63512 Hainburg (DE)
(74) Vertreter: Tomerius, Isabel

(56) Entgegenhaltungen:
- EP-A- 0 844 030
- WO-A-03/050453
- DE-A1- 19 517 106
- GB-A- 1 325 763
- GB-A- 2 286 986

## Beschreibung

Die Erfindung betrifft eine Sicherheitswerkbank gemäß dem Oberbegriff des Anspruchs 1. Derartige Sicherheitswerkbänke und insbesondere solche zur Bearbeitung mikrobiologischer Proben, wie sie beispielsweise in der DE 44 41 784 C2 beschrieben sind, schützen vor Kontamination durch Bioaerosole, die bei mikrobiologischen Arbeiten auftreten und freigesetzt werden.

Innerhalb der Sicherheitswerkbänke werden die kontaminierten Luftströme mit Hilfe von Gebläsen als gerichtete Luftströme fortgeführt und über Filter geleitet, welche die Verunreinigungen aus dem Luftstrom zurückhalten. Wenigstens ein Teil der gefilterten Luft wird derart gereinigt als Abluftvolumenstrom, im Folgenden kurz als Abluftstrom bezeichnet, der Außenluft wieder zugeführt.

Sicherheitswerkbänke unterscheiden sich in ihrem Sicherheitsvorkehrungen und werden entsprechend den unterschiedlichen internationalen Normen gebaut, geprüft und zugelassen. Unter anderem bieten Sicherheitswerkbänke Personenschutz oder Personen- und Produktschutz.

Bei Sicherheitswerkbänken, die nur Personenschutz bieten, spricht man von Sicherheitswerkbänken der Klasse I, wobei der Personenschutz durch das Ansaugen von Außenluft durch die Arbeitsöffnung in den Arbeitsraum der Sicherheitswerkbank erreicht wird. Solange dieser Außenluftstrom nicht behindert und ausreichend Luft angesaugt wird, können Partikel und Aerosole nicht aus dem Innenraum der Sicherheitswerkbank nach außen gelangen. Die angesaugte Außenluft bildet also einen durch die Arbeitsöffnung strömenden Luftvorhang, der die an der Sicherheitswerkbank arbeitende Person bzw. die Umwelt vor Kontamination durch die Partikel schützt.

Ein ausreichender Personenschutz ist Voraussetzung für den Betrieb von Sicherheitswerkbänken. Diese auch als Rückhaltevermögen bezeichnete Eigenschaft einer Sicherheitswerkbank wird zum Beispiel durch eine genau festgelegte Lufteintrittsgeschwindigkeit in die Arbeitsöffnung definiert. Sie ist direkt proportional zum Abluftstrom, so dass Veränderungen des Abluftstroms einen direkten Einfluss auf den Personenschutz und auf die Sicherheit des Anwenders haben.

Sicherheitswerkbänke der Klasse II bieten zusätzlich zum Personenschutz auch den Arbeitsgegenständen in der Werkbank Schutz vor Kontaminationen von außen oder vor Kontamination durch andere in der Werkbank befindliche Proben (so genannte Kreuzkontamination). Der Schutz vor dieser Art von Verunreinigungen wird als Produktschutz bezeichnet. Der Produktschutz ergibt sich daraus, dass ein Teil des in der Werkbank angesaugten Luftstroms nach dem Filtern wieder dem Innenraum als Umluftstrom zugeführt wird. Üblicherweise wird dieser Umluftstrom in einer vertikalen Fallströmung von oben nach unten in den Arbeitsraum der Werkbank gerichtet. Dieser auch als "Downflow" bezeichnete Umluftstrom umspült die auf der Arbeitsplatte befindlichen Gegenstände und verhindert, dass verunreinigte Luft von außen oder von anderen Proben in Kontakt mit diesen Gegenständen kommen kann. Der Umluftstrom trifft wiederum im Bereich der Ansaugöffnung, die sich meist an der Vorderkante der Arbeitsplatte befinden, auf den in den Innenraum strömenden Außenluftstrom, so dass keine Partikel nach außen dringen können. Der Produktschutz, einschließlich des Schutzes vor Kreuzkontamination, wird also maßgeblich durch das Verhältnis zwischen Downflow und Lufteintrittsgeschwindigkeit des Außenluftstroms erzielt.

Um diese Luftströme zu erzeugen, weist eine normale Sicherheitswerkbank der Klasse II ein Wechselstromgebläse auf, welches einen Gesamtluftstrom aus dem Arbeitsinnenraum ansaugt und in einen Umluftfilter und einen Abluftfilter bläst. Bei diesen Filtern handelt es sich um Hochleistungs-Schwebstofffilter, zum Beispiel HOSCH- oder HEPA-Filter, welche in der Lage sind, die betreffenden Mikroorganismen aus dem Luftstrom herauszufiltern.

Bei der Inbetriebnahme einer solchen Sicherheitswerkbank wird der aus dem Gerät auszublasende Abluftstrom, also die auszublasende Luftmenge pro Zeiteinheit, über Luftklappen oder über den Strömungswiderstand der im Gerät eingebauten Filter mit Hilfe eines kalibrierten Anemometers auf einen nominalen Sollwert fest eingestellt. Üblicherweise werden etwa 70 % des aus dem Arbeitsinnenraum angesaugten Gesamtluftstroms als Umluftstrom wieder in den Arbeitsinnenraum geführt und die verbleibenden 30 % als Abluftstrom an die Raumluft bzw. aus dem Raum herausführende Abluftsysteme abgegeben.

Aufgrund der systembedingten Kopplung von Umluft- und Abluftstrom ist es bei diesen Sicherheitswerkbänken nicht ohne weiteres möglich, den Produktschutz unabhängig vom Personenschutz einzustellen. Man hat daher in der Vergangenheit bereits Sicherheitswerkbänke mit separaten Gebläsen für Um- und Abluft entwickelt, die eine solche getrennte Einstellung ermöglichen. Aus der Druckschrift GB 1 325 763 A ist eine Sicherheitswerkbank mit einem von einem Gehäuse umgebenen Arbeitsraum bekannt, welche eine Arbeitsöffnung zum Einlassen eines in den Arbeitsraum einströmenden Außenluftstroms aufweist. Sie weist ein Abluftgebläse mit einem Abluftfilter, durch welchen ein Teil des einströmenden Außenluftstroms als Abluft aus der Sicherheitswerkbank austritt, sowie ein Umluftgebläse mit einem Umluftfilter auf, durch welchen ein Teil des einströmenden Außenluftstroms als Umluft in den Arbeitsraum geblasen wird. Um einen konstanten Druckunterschied zwischen dem Arbeitsraum und der Umgebung und somit Produkt- und Personenschutz zu gewährleisten, wird gemäß GB 1 325 763 A vorgeschlagen, die Luftströmung innerhalb des Umluftgebläses zu messen und gegebenenfalls die Leistungen bzw. Drehzahlen der Gebläse manuell zu verstellen, wobei die Drehzahl des Abluftgebläses proportional an die Drehzahl des Umluftgebläses gekoppelt ist.

Bei diesem zweiten Typ einer Sicherheitswerkbank wird bei der Inbetriebnahme zunächst der Personenschutz und dann der Produktschutz justiert. Dazu wird die Förderleistung des Abluftgebläses ebenfalls über Luftklappen, Filterwiderstände oder eine entsprechende elektrische Einstellung der Förderleistung des Abluftgebläses fest eingestellt. Aus der Einstellung des Abluftgebläses ergibt sich die Lufteinströmgeschwindigkeit des Außenluftstroms im Bereich der Arbeitsöffnung, also der Personenschutz. Nach Einstellung des Abluftgebläses erfolgt die Einstellung der Strömungsgeschwindigkeit des nach unten gerichteten Umluftstroms, um nunmehr den Produktschutz zu justieren. Dieser Umluftstrom hat allerdings wiederum Einfluss auf die Lufteintrittsgeschwindigkeit des Außenluftstroms, weshalb die Lufteintrittsgeschwindigkeit neu überprüft und oft nochmals justiert werden muss. Gegebenenfalls muss danach wiederum eine Nachjustierung von Um- und Abluftgebläse erfolgen.

Diese wechselweise und iterative Einstellung des Abluft- und des Umluftgebläses ist aufwändig und abhängig von den aktuellen Strömungsverhältnissen in der Sicherheitswerkbank bzw. im externen Abluftsystem, in das die Sicherheitswerkbank eingebunden ist. Daher ändert sich auch bei den bekannten Sicherheitswerkbänken mit zunehmender Beladung der Filter oder bei Strömungswiderstandsänderungen durch zum Beispiel Störungen im externen Abluftsystem die Lufteintrittsgeschwindigkeit. Mit zunehmender Belegung des Abluftfilters verringert sich das Abluftvolumen. Damit nimmt auch die eingesaugte Außenluft und entsprechend der Personenschutz der Geräte ab.
Eine weitere Sicherheitswerkbank mit Messung des Umluftvolumenstroms und Abluftvolumenstroms ist aus der Druckschrift DE - 102 17 904 bekannt.

Von diesem Hintergrund ausgehend ist es die Aufgabe der Erfindung, eine Sicherheitswerkbank anzugeben, welche einen erhöhten und gleichbleibend guten Personen- und Produktschutz aufweist.

Die Lösung dieser Aufgabe gelingt mit der Sicherheitswerkbank gemäß Anspruch 1. Weitere Ausführungsformen sind den Unteransprüchen zu entnehmen.

Die Erfindung betrifft also eine Sicherheitswerkbank, welche vom Grundaufbau wie eine herkömmliche Sicherheitswerkbank ausgebildet sein kann. So weist sie einen von einem Gehäuse umgebenen Arbeitsraum auf, in den während des Betriebs der Werkbank durch eine auf der Gehäusefrontseite befindliche und mit einer verstellbaren Frontscheibe veränderbare Arbeitsöffnung ein Außenluftstrom einströmt. Die erfindungsgemäße Sicherheitswerkbank weist zudem ein Abluftgebläse und ein Umluftgebläse auf, die einen Luftstrom in der Sicherheitswerkbank fördern.
Der vom Abluftgebläse angesaugte Teilluftstrom des Gesamtluftstroms wird durch einen Abluftfilter geleitet und als Abluftstrom aus der Sicherheitswerkbank geblasen, während der vom Umluftgebläse angesaugte Teilluftstrom des Gesamtluftstroms durch einen Umluftfilter hindurch als nach unten gerichteter Umluftstrom in den Arbeitsraum geblasen wird.

Die erfindungsgemäße Sicherheitswerkbank unterscheidet sich nun von den herkömmlichen Sicherheitswerkbänken dadurch, dass sie eine Regelvorrichtung umfasst, die die Förderleistung des Abluftgebläses und des Umluftgebläse getrennt voneinander regelt. Die Regelung erfolgt derart, dass das den Abluftfilter verlassende Volumen des Abluftstroms einem in der Regelvorrichtung hinterlegten Abluftstrom-Sollwert im Wesentlichen entspricht und das den Umluftfilter verlassende Volumen des Umluftstroms einem ebenfalls in der Regelvorrichtung gespeicherten Umluftstrom-Sollwert im Wesentlichen entspricht.

Bei dem in der Regelvorrichtung hinterlegten Abluftstrom-Sollwert handelt es sich um einen Wert für das Volumen des Abluftstroms, der so gewählt ist, dass ein Außenluftstrom in die Werkbank einströmt, der ausreicht, den benötigten Personenschutz sicherzustellen. Ist die Förderleistung des Abluftgebläses so vorgegeben, dass der aus dem Filter strömende Abluftstrom diesem Abluftstrom-Sollwert entspricht, ist sichergestellt, dass die gewünschte Lufteintrittsgeschwindigkeit des Außenluftstroms in der Arbeitsöffnung vorhanden ist. Die gewünschte Lufteintrittsgeschwindigkeit ergibt sich üblicherweise aus den einschlägigen Normen und definiert, wie bereits ausgeführt, den Personenschutz für die Benutzer der Sicherheitswerkbank.

Der Abluftstrom-Sollwert kann zum Beispiel bei der Inbetriebnahme der Sicherheitswerkbank vom Wartungspersonal eingestellt und in der Regelvorrichtung eingespeichert werden. Der für die spezielle Sicherheitswerkbank geeignete Wert hängt auch von der Umgebung ab, in der die Sicherheitswerkbank betrieben werden soll. Beispielsweise sind die Einflüsse eines gebäudeeigenen Abluftsystems zu berücksichtigen. Die Festlegung des Abluftstrom-Sollwerts geschieht zum Beispiel mit Hilfe eines tragbaren, geeichten Anemometers, mit dem die Lufteintrittsgeschwindigkeit in der Arbeitsöffnung bei einer Grundeinstellung der Abluftgebläseleistung gemessen wird. Weicht die gemessene Lufteintrittsgeschwindigkeit von der für den Personenschutz erforderlichen geforderten Lufteintrittsgeschwindigkeit ab, wird die Abluftgebläseleistung manuell so eingestellt, dass sich die geforderte Lufteintrittsgeschwindigkeit im Bereich der Arbeitsöffnung ergibt. Entspricht dann die gemessene Lufteintrittsgeschwindigkeit der geforderten Lufteintrittsgeschwindigkeit, wird dies der Regelvorrichtung in geeigneter Form, zum Beispiel durch Eingabe in die Software der Regelvorrichtung, übermittelt. Der gemessene Strömungswert kann in einer Speichereinheit der Regelvorrichtung abgespeichert werden. Die Regelvorrichtung misst nun die zu diesem Zeitpunkt vorliegende Abluftströmung hinter dem, also strömungsabwärts vom, Abluftfilter und hinterlegt diesen Wert der Abluftströmung als Abluftstrom-Sollwert. Der Wert kann beispielsweise als Abluftvolumen pro Zeit oder als Abluftgeschwindigkeit angegeben werden. Im folgenden Betrieb wird die Regelvorrichtung die Abluftgebläseleistung dann immer so einstellen, dass die Abluftströmung diesen Abluftstrom-Sollwert erreicht.

Die Regelung des Abluftgebläses in Abhängigkeit von der den Abluftfilter tatsächlich verlassenden Abluftmenge hat den Vorteil, dass die aus der Sicherheitswerk geförderte Abluftmenge stets konstant im Bereich des Abluftstrom-Sollwerts gehalten wird. Eine zum Beispiel aufgrund der Beladung des Abluftfilters resultierende Reduzierung der aus dem Filter strömenden Abluftmenge kann durch eine Erhöhung der Förderleistung des Abluftgebläses ausgeglichen werden. Hierzu übermittelt die Regelvorrichtung beispielsweise, wenn eine Abweichung des gemessenen Abluftstroms vom Abluft-Sollwert festegestellt wird, einen Steuerimpuls, mit dem die Drehzahl des Abluftgebläses heraufgesetzt wird, bis der gemessene Wert wieder mit dem gespeicherten Wert übereinstimmt. Dies hat zur Folge, dass Widerstandsänderungen am bzw. im Abluftsystem der Sicherheitswerkbank keine Änderungen der Lufteintrittsgeschwindigkeit an der Arbeitsöffnung nach sich ziehen. Eine Verschlechterung des Personenschutzes der Sicherheitswerkbank wird dadurch vermieden.

Durch die vom Abluftstrom unabhängige Regelung der Förderleistung des Umluftgebläses auf einen bestimmten Umluftstrom-Sollwert, den der aus dem Umluftfilter strömende Umluftstrom aufweisen soll, ist es in Analogie zum Abluftstrom möglich, den in den Innenraum der Sicherheitswerkbank nach unten strömenden Umluftstrom gleichbleibend bei einem geeigneten Wert für den Produktschutz zu halten. So können auch im Umluftsystem auftretende Luftwiderstandsänderungen, die zum Beispiel aus der Beladung des Umluftfilters herrühren, ausgeglichen werden. Der Umluftstrom-Sollwert kann dabei den Anwendungsbedürfnissen entsprechend vorgegeben werden. Denkbar ist dabei auch, mehr als nur einen Umluftstrom-Sollwert zu hinterlegen, so dass der Benutzer beispielsweise zwischen verschiedenen Umluftstrom-Stufen wählen kann. Je nach gewählter Stufe regelt dann die Regelvorrichtung das Umluftstromgebläse so, dass der der gewählten Stufe entsprechende Umluftstrom-Sollwert eingehalten wird.

Der Umluftstrom-Sollwert kann, ebenso wie der Abluftstrom-Sollwert, als Wert der Umluftstrom-Geschwindigkeit oder als durch das Umluftstromgebläse pro Zeiteinheit gefördertes Volumen angegeben werden. Es ist aber auch möglich, den Umluftstrom-Sollwert in Bezug auf den Abluftstrom-Sollwert zu definieren. So kann die Förderleistung des Umluftgebläses auch über das Verhältnis von Umluft zu Abluft bestimmt werden, und der Umluftstrom-Sollwert ist als Bruchteil oder als Vielfaches des Abluftstrom-Sollwerts angegeben. Anstelle des Abluftstrom-Sollwerts kann als Ausgangsbasis für die Festlegung des Soll-Verhältnisses auch die gemessene Außenluftströmung verwendet werden. Wie bereits erwähnt, hängt diese Außenluftströmung von der Abluftströmung ab, da ausströmende Abluft durch einströmende Außenluft ersetzt wird. Die Außenluftströmung kann durch geeignete Messparameter wie das Volumen pro Zeit oder die Einströmgeschwindigkeit ermittelt und bei Festlegung des Umluftstrom-Sollwertes berücksichtigt werden. Unabhängig davon, welchen Sollwert man zur Regelung der Förderleistung des Umluftgebläses heranzieht, erfolgt sie Regelung derart, dass die Umluftströmung während des Betriebs der Sicherheitswerkbank im gewünschten Rahmen konstant gehalten wird. Entsprechend bleibt auch das Verhältnis von Umluft- zu Außenluftstrom konstant.

Selbstverständlich ist im Rahmen der Erfindung mit der Einhaltung eines vorgegebenen Sollwerts nicht gemeint, dass dieser Wert ständig exakt eingehalten wird. Wie bei allen Regelvorgängen beruht auch die Regelung der Förderleistungen der Gebläse der Sicherheitswerkbank darauf, dass in bestimmten zeitlichen Abständen eine fortwährende Nachjustierung erfolgt, wenn Abweichungen vom Soll festgestellt werden. Außerdem kann von vorneherein eine gewisse Abweichungsmarge zugelassen sein, innerhalb derer der Betrieb noch als zulässig erkannt wird und noch keine Nachregelung erfolgen muss. Der Sollwert muss demnach nicht ein punktueller Wert sein, sondern es kann sich auch um einen definierten Sollwerte-Bereich handeln. Gewisse definierte Abweichungen und Schwankungen der Förderleistungen der Gebläse sind also auch in der erfindungsgemäßen Sicherheitswerkbank möglich. Die Einstellung der Regelvorrichtung sollte jedoch so erfolgen, dass die zulässigen Abweichungen möglichst gering sind und den sicheren Betrieb der Werkbank nicht beeinträchtigen.

Die erfindungsgemäße Sicherheitswerkbank sorgt nicht nur für eine von äußeren Einflüssen weitgehend unabhängige zuverlässige Einhaltung von Personen- und Produktschutz, sondern erleichtert bereits das Einstellen der Grundbetriebsparameter. Da das Umluft- und das Abluftgebläse voneinander unabhängig und in Abhängigkeit der den Abluft- bzw. den Umluftfilter tatsächlich verlassenden Luftströme geregelt sind, bleibt die Lufteintrittsgeschwindigkeit des einströmenden Außenluftstroms auch beim Einstellen der Umluftströmung im Wesentlichen konstant. Ein aufwendiges Nachstellen des Abluftvolumenstroms nach Justage des Produktschutzes entfällt.

Wird die erfindungsgemäße Sicherheitswerkbank an ein externes Abluftsystem angeschlossen, ist sie wegen der Regelung des den Filter verlassenden Abluftstroms auf sich im Abluftsystem ändernde Strömungswiderstände stets optimal eingestellt. Genauer gesagt, werden diese Luftwiderstandsänderungen automatisch von der Regelvorrichtung so ausgeglichen, dass stets ein im Wesentlichen gleichbleibender Abluftvolumenstrom die Sicherheitswerkbank verlässt. Derartige Änderungen der Strömungswiderstände bei einem Abluftsystem ergeben sich zum Beispiel dann, wenn mehrere Sicherheitswerkbänke an einem Abluftkanal gemeinsam betrieben werden und einzelne Sicherheitswerkbänke zu- oder abgeschaltet werden. Solche Schwankungen führen bei Verwendung erfindungsgemäßer Werkbänke zu keiner Verschlechterung des Personen- oder Produktschutzes der einzelnen Sicherheitswerkbank, da diese ihr Abluftströmung selbständig nachjustiert. Bei Betrieb mehrerer erfindungsgemäßer Sicherheitswerkbänke an einem gemeinsamen Abluftsystem kann man nunmehr jede einzelne Sicherheitswerkbank, wenn sie nicht mehr betrieben werden soll, einfach abschalten, ohne dabei die Luftströmungssysteme der weiterhin im Betrieb gehaltenen Sicherheitswerkbänke zu beeinflussen. Auch aus anderen Gründen auftretende Druckschwankungen innerhalb des Abluftsystems werden von der erfindungsgemäßen Sicherheitswerkbank ohne Nachteile für Personen- und Produktschutz aufgefangen.

Es ist zu betonen, dass es sich insbesondere bei großen Werkbänken bei dem Umluft- bzw. Abluftgebläse auch jeweils um eine Mehrzahl von Einzelgebläsen handeln kann, die gemeinsam wie ein einzelnes Gebläse von der Regelvorrichtung angesteuert werden.

In einer vorteilhaften Weiterbildung der Sicherheitswerkbank sind sowohl das Abluftgebläse als auch das Umluftgebläse stufenlos regelbare Gleichstromgebläse. Diese besonders gut regelbaren Gleichstromantriebe der Gebläse erlauben es, selbst bei einer langsamen Beladung der Hochleistungsfilter die jeweiligen Luftströme gleichmäßig und fein nachzuregeln und so im Wesentlichen konstant zu halten.

Die Messung der tatsächlich vom Abluftgebläse und Umluftgebläse erzielten Volumenströme kann auf an sich im Stand der Technik übliche Art und Weise erfolgen. Die hierfür verwendeten Messgeräte werden nachfolgend als Strömungssensoren bezeichnet. Beispielsweise kann als Strömungssensor zur Messung des Volumendurchflusses pro Zeiteinheit eine Druckdose verwendet werden. Auch Anemometer oder sonstige Geräte zur Bestimmung der Strömungsgeschwindigkeit sind verwendbar. Die ermittelten Werte werden an die Regelvorrichtung übermittelt und dort mit dem gespeicherten zugehörigen Sollwert verglichen. Weichen Soll- und Istwert nicht mehr als zulässig voneinander ab, wird das Gebläse wie bisher weiterbetrieben. Wird dagegen eine Abweichung festgestellt, werden Richtung und Maß der Abweichung ermittelt. Anhand von in der Regelvorrichtung hinterlegten Wertetabellen oder Rechenvorschriften wird dann von einem Prozessor ermittelt, wie die Drehzahl des Gebläses geändert werden muss, damit die Volumenförderleistung des Gebläses wieder dem Soll entspricht. Die Regelvorrichtung übermittelt dann der Stromzufuhr des Gebläses einen entsprechenden Steuerimpuls, um die Drehzahl des Gebläses zu erhöhen oder erniedrigen.

Die Anordnung der Strömungssensoren zur Ermittlung der Strömungswerte der jeweiligen Luftströmung ist nicht besonders beschränkt, sollte aber so erfolgen, dass störende und das Messergebnis verfälschende Einflüsse möglichst vermieden werden. Bevorzugt werden der Abluftströmungssensor zur Messung der Geschwindigkeit/des Strömungsvolumens des Abluftstroms und der Umluftströmungssensor zur Messung der Geschwindigkeit/des Strömungsvolumens des Umluftstroms hinter dem Abluftfilter bzw. dem Umluftfilter angeordnet. Zur weiteren Überwachung kann auch ein Strömungssensor für die Messung der durch die Arbeitsöffnung einströmenden Außenluft vorgesehen sein.

Vorteilhafterweise weist die Sicherheitswerkbank auch eine Messeinrichtung zur Messung der Position der Frontscheibe auf. Diese Messeinrichtung kann zum Beispiel unmittelbar an der Unterkante der Frontscheibe angeordnet sein und über elektrische Kontakte die Position der Frontscheibenkante in ihren Führungsmitteln darstellen. Verwendbar sind aber auch andere geeignete Messeinrichtungen. Derartige Messvorrichtungen sind im Stand der Technik grundsätzlich bekannt und müssen hier nicht näher erläutert werden.

Zweckmäßig sind zumindest für einen der vorstehend beschriebenen Messparameter und bevorzugt für alle Messparameter in der Regelvorrichtung Wertebereiche hinterlegt, die angeben, innerhalb welchen Rahmens die Sicherheitswerkbank sicher und zuverlässig oder den gesetzlichen oder sonstigen Vorschriften entsprechend betrieben werden kann. Diese Sicherheitsgrenzbereiche werden bevorzugt zusätzlich zu den für die Gebläseregelung benötigten Messparametern überwacht, um eine besonders hohe Betriebssicherheit der Sicherheitswerkbank zu erreichen.

Die zusätzliche Überwachung der Abluftströmungsgeschwindigkeit, Umluftströmungsgeschwindigkeit und Lufteintrittgeschwindigkeit innerhalb vorbestimmter Grenzen stellt sicher, dass die Sicherheitswerkbank nicht unbemerkt in nicht einwandfreiem Zustand betrieben wird. Gleiches gilt für die Überwachung der Position der Frontscheibe. Um einen sicheren Betrieb zu ermöglichen, darf diese nicht über längere Zeit zu weit geöffnet bleiben, da sich bei einem zu großen Öffnungsquerschnitt der Arbeitsöffnung die benötigten Luftströmungen nicht aufrecht erhalten lassen und so Personen- und Produktschutz nicht gesichert werden können. Stellt das diese Parameter überwachende Sicherheitssystem der Sicherheitswerkbank eine Abweichung von den vorgegebenen Bereichen fest, wird zweckmäßig ein akustischer und/oder optischer Alarm ausgegeben.

Bevorzugt umfasst die Sicherheitswerkbank zudem wenigstens eine Messvorrichtung, die den Stromverbrauch und/oder die Drehzahl des Abluftgebläses, des Umluftgebläses oder beider Gebläse ermittelt. Diese Messergebnisse werden in vorgegebenen Zeitintervallen an die Regelvorrichtung weitergegeben und dort ausgewertet. Zu diesem Zweck sind in einer Speichereinheit der Regelvorrichtung Wertebereiche gespeichert, die angeben, innerhalb welcher Grenzen der Stromverbrauch oder die Drehzahl des jeweiligen Gebläses liegen soll.

Bevorzugt ist die Regelvorrichtung so programmiert, dass die Gebläse nur innerhalb der für sie gespeicherten Betriebsbereiche betrieben werden. So kann wirkungsvoll verhindert werden, dass die Gebläse beispielsweise durch zu große Stromzufuhr oder zu hohe Drehzahl beschädigt werden. Ist ein Betrieb unter den vorgegebenen Bedingungen nicht möglich, löst das Sicherheitssystem der Werkbank einen akustischen und/oder optischen Alarm aus. Zusätzlich kann, wie in allen anderen Alarmfällen auch, die Ursache für den ausgegebenen Alarm auf einem Display oder in sonstiger geeigneter Weise angezeigt werden. Ursache für einen "Gebläsealarm" kann beispielsweise sein, dass aufgrund eines stark beladenen Filters die Leistung des Gebläses so hoch sein müsste, um das gewünschte Fördervolumen zu gewährleisten, dass dies mit der maximal zulässigen Drehzahl oder dem maximal zulässigen Stromverbrauch nicht mehr möglich ist.

Zweckmäßig weist das Sicherheitsüberwachungssystem der Sicherheitswerkbank zusätzlich Einrichtungen zur Überwachung der Funktionsfähigkeit wesentlicher Bauteile der Sicherheitswerkbank auf. Zusätzlich zur Einhaltung vorgegebener Betriebsparameter wird also überwacht, ob bestimmte Bauteile der Sicherheitswerkbank überhaupt betriebsbereit sind. Bevorzugt wird wenigstens eines der Bauteile Abluft-Strömungssensor, Umluft-Strömungssensor, Außenluft-Strömungssensor, Abluftgebläse, Umluftgebläse, Regelvorrichtung und Stromversorgung der Sicherheitswerkbank von dem Sicherheitsüberwachungssystem überwacht. Um einen sicheren Betrieb der Werkbank zu gewährleisten, werden zweckmäßig mehrere oder alle dieser Bauteile regelmäßig auf ihre ungestörte Betriebsfähigkeit hin überwacht. Wird ein Ausfall oder ein Defekt auch nur eines der überwachten Bauteile bemerkt, wird ein optischer und/oder akustischer Alarm ausgegeben. Von Vorteil ist vor allem die Überwachung der Regelungsvorrichtung durch ein unabhängiges Sicherheitsüberwachungssystem, da so sichergestellt wird, dass die vom Regelungssystem geregelten Luftgeschwindigkeiten in den jeweiligen Bereichen der Sicherheitswerkbank den Vorgaben entsprechen und ein ausreichender Personenschutz garantiert ist.

Die mehrfache Kontrolle der wesentlichen Komponenten und Betriebsparameter der Sicherheitswerkbank ermöglicht eine besonders sichere Einhaltung der Vorschriften nach DIN EN 12469. Die zur Überwachung eingesetzten Sensoren sind an sich bekannt und müssen daher nicht näher erläutert werden.

Die Erfindung wird nachfolgend anhand einer Zeichnung näher erläutert. Darin zeigen schematisch:
- Fig. 1: ein Ausführungsbeispiel einer erfindungsgemäßen Sicherheitswerkbank;
- Fig. 2: einen Querschnitt der in Fig.1 gezeigten erfindungsgemäßen Sicherheitswerkbank; und
- Fig. 3: ein Schaltbild des Sicherheitsüberwachungssystems und der Regelvorrichtung der in Fig.1 und Fig. 2 gezeigten Sicherheitswerkbank.

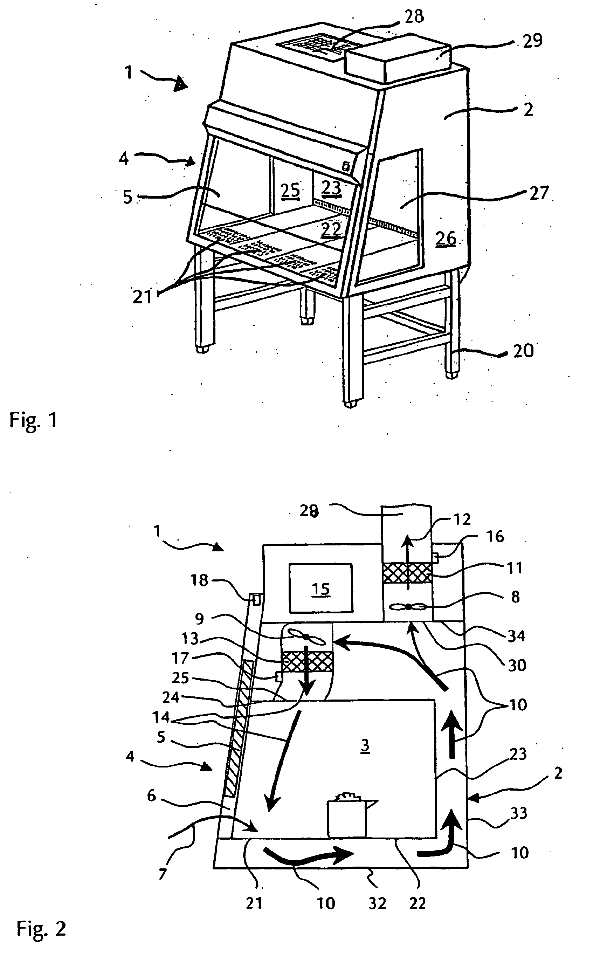

Fig. 1 und Fig.2 zeigen eine erfindungsgemäße Sicherheitswerkbank 1, die beispielsweise zur Bearbeitung mikrobiologischer Kulturen eingesetzt werden kann. In ihrem Grundaufbau entspricht die Sicherheitswerkbank 1 dem, was aus dem Stand der Technik bekannt ist. Die Sicherheitswerkbank 1 weist ein Gehäuse 2 auf, welches einen Arbeitsinnenraum 3 umgibt. An der Gehäusefrontseite 4 ist eine verstellbare Frontscheibe 5 angeordnet. Die Frontscheibe 5 ist so gelagert, dass sie im Wesentlichen parallel zur Gehäusefrontseite 4 hoch und herunter verschoben werden kann. Durch Herunterschieben der Frontscheibe 5 kann die auf der Gehäusefrontseite befindliche Arbeitsöffnung 6 verkleinert werden. Die Höhe der Arbeitsöffnung 6 ergibt sich also aus dem Spalt zwischen der Unterseite der Frontscheibe 5 und der Arbeitsraum-Bodenplatte 22 des Gehäuses 2.

Das Gehäuse 2 ist üblicherweise zweischalig aufgebaut, so dass das Gehäuse selbst zumindest teilweise als Lüftungskanal für die in der Sicherheitswerkbank zirkulierenden Luftströme dient. An den Seiten 25, 26 des Gehäuses befinden sich zwei Seitenscheiben 27. Die Seitenscheiben 27 wie auch die Frontscheibe 25 bestehen aus Glas, zum Beispiel einem geeigneten Verbundglas. Wie bereits erwähnt und aus der Fig. 2 zu entnehmen, weist das Gehäuse 2 eine Arbeitsraum-Bodenplatte 22 mit im Bereich der Arbeitsöffnung 6 angeordneten Ansaugöffnungen 21 auf. Unterhalb der Arbeitsraum-Bodenplatte 22 verläuft eine außenliegende Bodenplatte 32. In dem von diesen beiden Platten 22, 32 eingeschlossenen Zwischenraum bzw. Lüftungskanal strömt ein Luftstrom 10 von der Frontseite 4 in Richtung auf die Gehäuserückwand.

Im weiteren Strömungsverlauf wird der Luftstrom 10 durch den Zwischenraum zwischen innerer Rückwand 23 und äußerer Rückwand 33 nach oben geführt. Oberhalb des Arbeitsinnenraums 3 befinden sich das Abluftgebläse 8 und das Umluftgebläse 9, die jeweils Teilluftströme des Luftstroms 10 ansaugen. Die Dicke der Strömungspfeile 10, 12, 14 in Fig. 2 verdeutlicht stark schematisiert die unterschiedlichen Volumina der jeweiligen Luftströme.

Der Arbeitsinnenraum 3 wird von einer inneren Abdeckung 24 abgedeckt, welche eine Umluftauslassöffnung 25 aufweist, durch die der vom Umluftgebläse 9 angesaugte und durch den Umluftfilter 13 geblasene Umluftstrom 14 nach unten gerichtet in den Arbeitsinnenraum 3 geblasen wird. Der Umluftfilter 13 ist beispielsweise ein herkömmlicher HEPA-Filter, der Verunreinigungen wie Mikroorganismen aus der Umluft herausfiltert und so verhindert, dass mit dem Umluftstrom 14 Verunreinigungen in den Arbeitsinnenraum 3 zurückgetragen werden. Die von oben nach unten strömende Umluft bildet einen im Wesentlichen senkrechten Vorhang vor der Arbeitsöffnung 6 und zwischen im Arbeitsinnenraum 3 angeordneten Proben und trägt so zum Produktschutz bei.

Der Abluftstrom 12 wird durch das Abluftgebläse 8 über eine Ansaugöffnung 30 in der außenliegenden Abdeckung 34 des Gehäuses 2 angesaugt. Das Abluftgebläse 8 bläst den Abluftstrom 12 durch den Abluftfilter 11 in den Abluftkanal 28, durch den der Abluftstrom 12 einem hier nicht näher dargestellten gebäudeeigenen Abluftsystem zugeführt wird. Bei dem Abluftfilter 11 kann es sich erneut um einen herkömmlichen Filter wie einen HEPA-Filter handeln. Er verhindert, dass Mikroorganismen oder sonstige Verunreinigungen mit der Abluft aus der Sicherheitswerkbank 1 herausgetragen werden.

Die aus der Sicherheitswerkbank 1 herausgeführte Abluft 12 wird durch einen durch die Arbeitsöffnung 6 in den Arbeitsinnenraum 3 hereinströmenden Außenluftstrom 7 ersetzt. Dieser Außenluftstrom sorgt für den Personenschutz und verhindert, wenn er ausreichend eingestellt ist, dass Verunreinigungen durch die Arbeitsöffnung 6 aus der Sicherheitswerkbank 1 herausgelangen. Die Aufrechterhaltung eines ausreichenden Außenluftstroms 7 wird durch die Regelung des Abluftstroms 12 bewirkt. Hierfür ist in der Sicherheitswerkbank 1 eine Regelvorrichtung 15 vorhanden.

In der Regelvorrichtung 15 wurde vor Inbetriebnahme der Sicherheitswerkbank 1 ein Sollwert hinterlegt, der angibt, welches Abluftvolumen pro Zeiteinheit vom Abluftgebläse 8 gefördert werden soll. Die Regelvorrichtung 15 regelt die Stromversorgung des Abluftgebläses 8 nun so, dass dieses einen Abluftvolumenstrom fördert, dessen Größe dem Sollwert entspricht.

Zur Überwachung der Volumenförderleistung des Abluftgebläses 8 ist stromabwärts von diesem hinter dem Abluftfilter 11 ein Abluft-Strömungssensor 16 angebracht, der die den Filter 11 verlassende Abluftströmung 12 ermittelt und den ermittelten Wert an die Regelvorrichtung 15 überträgt. Beispielsweise handelt es sich bei dem Abluft-Strömungssensor 16 um eine Druckdose, welche den Abluft-Volumenstrom ermittelt. In der Regelvorrichtung 15 wird der übermittelte Wert mit dem Sollwert verglichen. Ist der tatsächliche Volumenstrom höher als festgelegt, regelt die Regelvorrichtung 15 das Abluftgebläse herunter, bis der gewünschte Volumenstrom erreicht ist. Häufiger wird jedoch der Fall auftreten, dass beispielsweise wegen Zusetzung des Abluftfilters 11 eine Steigerung der Gebläseleistung notwendig wird, um den festgelegten Volumenstrom aufrecht zu erhalten. In solch einem Fall sendet die Regelvorrichtung 15 einen Steuerimpuls, der bewirkt, dass die Drehzahl des Abluftgebläses 8 erhöht wird.

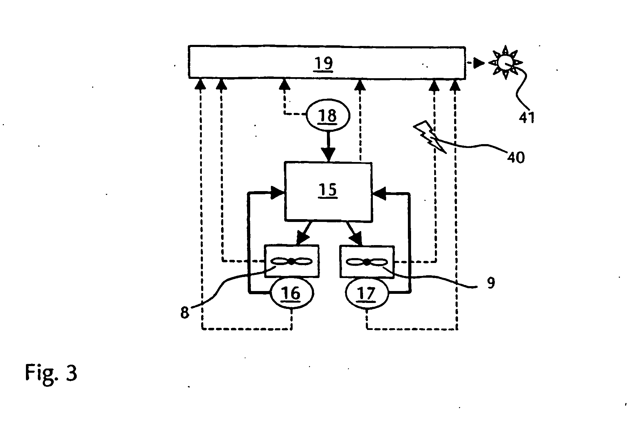

Gleichzeitig und unabhängig vom Abluftgebläse regelt die Regelvorrichtung 15 das Umluftgebläse 9 so, dass ein Umluftstrom 14 mit einem ebenfalls vorab festgelegten Volumen pro Zeit erhalten wird. Dazu misst der Umluft-Strömungssensor 17 die Geschwindigkeit des aus dem Umluftfilter 13 austretende Umluftstroms 14 bzw. das Durchflussvolumen pro Zeit und übermittelt diesen Messwert der Regelvorrichtung 15. Ist der Messwert kleiner als der gewünschte Wert, erhöht die Regelvorrichtung 15 die Förderleistung des Umluftgebläses 9 so lange, bis der gewünschte Wert am Strömungssensor 17 festgestellt wird. Umgekehrt wird die Drehzahl des Gebläses 9 reduziert, wenn der Volumenfluss zu hoch ist. Der Regelungskreislauf ist schematisch in Fig. 3 dargestellt.

Da das Abluftgebläse 8 unabhängig vom Umluftgebläse 9 durch die Regelvorrichtung 15 in seiner Leistung geregelt wird, hat die Einstellung des Produktschutzes, also die Einstellung der Downflow-Geschwindigkeit des nach unten gerichteten Umluftstroms 14, keinen Einfluss auf den das Gehäuse 2 verlassenden Abluftstrom 12 und umgekehrt. Dadurch ist sichergestellt, dass Personenschutz und Produktschutz auch bei Änderung der äußeren Bedingungen unabhängig voneinander stets den Anforderungen entsprechen.

Um eine Einhaltung der hinterlegten Sollwerte erreichen zu können, wird zusätzlich die Fensterposition in der Sicherheitswerkbank 1 überwacht. Eine zu große Arbeitsöffnung 6 würde die Einhaltung der Sollwerte erschweren, wenn nicht unmöglich machen. Aus diesem Grund ist im Bereich der Arbeitsöffnung 6 eine Messeinrichtung 18 vorhanden, die die aktuelle Fensterposition ermittelt und den Messwert an eine Sicherheitseinrichtung 19 sendet (vgl. Fig. 3). Die Sicherheitseinrichtung 19 kann räumlich in die Rechenvorrichtung 15 integriert sein. Weicht die Fensterposition von dem für den Sicherheitsbetrieb erlaubten Positionsbereich ab, veranlasst die Sicherheitsvorrichtung 19 eine Alarmvorrichtung 41, ein akustisches und/oder optisches Signal abzugeben, das den Benutzer veranlassen soll, die Frontscheibe 5 zu schließen.

Zusätzlich zur Frontscheibe überwacht das Sicherheitsüberwachungssystem 19, das beispielsweise in einem in Fig. 2 mit 29 bezeichneten Schaltkasten angeordnet sein kann, die Regelvorrichtung 15 sowie die Strömungssensoren 16, 17, die Lüfter 8, 9 und die Messeinrichtung 18. In Fig. 3 sind die zum Sicherheitssystem 19 gehörenden Rückmeldungen als gestrichelte Pfeile dargestellt. Funktioniert eine der Komponenten nicht ordnungsgemäß, veranlasst die Sicherheitsvorrichtung ebenfalls die Ausgabe eines Alarmsignals durch die Alarmvorrichtung 41.

In dem in Fig. 3 gezeigten Schema beispielsweise liegt eine Fehlfunktion des Umluftgebläses 9 vor. Wie durch den Pfeil 40 schematisch angedeutet, wird diese Fehlermeldung dem Sicherheitsüberwachungssystem 19 gemeldet, welches wiederum eine Alarmvorrichtung 41 ansteuert, die hier eine Lampe ist. So verdeutlicht ein optischer Alarm dem Benutzer der Sicherheitswerkbank 1 die Fehlfunktion des Gebläses 9.

## Patentansprüche

1. Sicherheitswerkbank (1) mit einem von einem Gehäuse (2) umgebenen Arbeitsraum. (3) mit einer in der Gehäusefrontseite (4) befindlichen und mit einer verstellbaren Frontscheibe (5) einstellbaren Arbeitsöffnung (6) zum Einlassen eines in den Arbeitsraum (3) einströmenden Außenluftstroms (7), einem Abluftgebläse (8) und einem Umluftgebläse (9) zum Fördern eines Luftstroms (10) in der Sicherheitswerkbank (1), die so ausgebildet sind, dass ein vom Abluftgebläse (8) angesaugter Teilluftstrom durch einen Abluftfilter (11) als Abluftstrom (12) aus der Sicherheitswerkbank (1) und ein vom Umluftgebläse (9) angesaugter Teilluftstrom durch einen Umluftfilter (13) als nach unten gerichteter Umluftstrom (14) in den Arbeitsraum (3) geblasen wird, sowie einer Regelvorrichtung (15),
**dadurch gekennzeichnet,**
**dass** in der Regelvorrichtung (15) ein Abluftstrom-Sollwert sowie ein Umluftstrom-Sollwert gespeichert sind und die Regelvorrichtung (15) ausgebildet ist, die Förderleistung des Abluftgebläses (8) so zu regeln, dass das aus dem Abluftfilter (11) pro Zeiteinheit strömende Volumen des Abluftstroms (12) dem Abluftstrom-Sollwert im Wesentlichen entspricht, und die Regelvorrichtung (15) weiterhin ausgebildet ist, die Förderleistung des Umluftgebläses (9) so zu regeln, dass das den Umluftfilter (13) pro Zeiteinheit verlassende Volumen des Umluftstroms (14) dem Umluftstrom-Sollwert im Wesentlichen entspricht.

2. Sicherheitswerkbank nach Anspruch 1,
**dadurch gekennzeichnet,**
**dass** das Abluftgebläse (8) und das Umluftgebläse (9) stufenlos regelbare Gleichstromgebläse sind.

3. Sicherheitswerkbank nach einem der vorhergehenden Ansprüche,
**dadurch gekennzeichnet,**
**dass** ein Abluft-Strömungssensor (16) zur Messung der Geschwindigkeit des Abluftstroms (12) hinter dem Abluftfilter (11) angeordnet ist.

4. Sicherheitswerkbank nach einem der vorhergehenden Ansprüche,
**dadurch gekennzeichnet,**
**dass** ein Umluft-Strömungssensor (17) zur Messung der Geschwindigkeit des Umluftstroms (14) hinter dem Umluftfilter (13) angeordnet ist.

5. Sicherheitswerkbank nach einem der vorhergehenden Ansprüche,
**dadurch gekennzeichnet,**
**dass** ein Außenluft-Strömungssensor zur Messung der Lufteintrittsgeschwindigkeit des Außenluftstroms (7) im Bereich der Arbeitsöffnung (6) angeordnet ist.

6. Sicherheitswerkbank nach einem der vorhergehenden Ansprüche,
**dadurch gekennzeichnet,**
**dass** sie eine Messeinrichtung (18) zur Messung der Position der Frontscheibe (5) umfasst.

7. Sicherheitswerkbank nach einem der vorhergehenden Ansprüche,
**dadurch gekennzeichnet,**
**dass** sie wenigstens eine Messvorrichtung zur Bestimmung des Stromverbrauchs und/oder der Drehzahl wenigstens eines des Abluftgebläses (8) und des Umluftgebläses (9) aufweist.

8. Sicherheitswerkbank nach Anspruch 7,
**dadurch gekennzeichnet,**
**dass** in der Regelvorrichtung (15) Sollwertebereiche für den Stromverbrauch und/oder die Drehzahl von Abluftgebläse (8) und/oder Umluftgebläse (9) gespeichert sind.

9. Sicherheitswerkbank nach einem der vorhergehenden Ansprüche,
**dadurch gekennzeichnet,**
**dass** die Regelvorrichtung (15) mindestens ein Speichermedium zur Speicherung der Sollwerte und einen Prozessor zur Auswertung der ihr übermittelten Messwerte und zum Vergleich mit den gespeicherten Sollwerten aufweist.

10. Sicherheitswerkbank nach Anspruch 9,
**dadurch gekennzeichnet,**
**dass** sie ein Sicherheitsüberwachungssystem (19) aufweist, welches, wenn die Regelvorrichtung (15) für die Position der Frontscheibe (5) eine Abweichung von einem gespeicherten Sollwertebereich feststellt, einen optischen und/oder akustischen Alarm ausgibt.

11. Sicherheitswerkbank nach Anspruch 9 oder 10,
**dadurch gekennzeichnet,**
**dass** sie ein Sicherheitsüberwachungssystem (19) aufweist, welches, wenn die Regelvorrichtung (15) für den Stromverbrauch und/oder die Drehzahl von Abluftgebläse (8) und/oder Umluftgebläse (9) eine Abweichung von den gespeicherten Sollwertebereichen feststellt, einen optischen und/oder akustischen Alarm ausgibt.

12. Sicherheitswerkbank nach einem der Ansprüche 9 bis 11,
**dadurch gekennzeichnet,**
**dass** sie ein Sicherheitsüberwachungssystem (19) aufweist, welches, wenn die Regelvorrichtung (15) für die Strömungsgeschwindigkeit von wenigstens
- dem Abluftstrom (12) oder
- dem Umluftstrom (14) oder
- dem durch die Arbeitsöffnung (6) einströmenden Außenluftstrom (7) eine Abweichung von einem entsprechenden gespeicherten Sollwertebereich feststellt, einen optischen und/oder akustischen Alarm ausgibt.

13. Sicherheitswerkbank nach einem der vorhergehenden Ansprüche,
**dadurch gekennzeichnet,**
**dass** sie ein Sicherheitsüberwachungssystem (19) zur Überwachung der Funktionsfähigkeit wenigstens einer der folgenden Komponenten aufweist:
- Abluft-Strömungssensor (16)
- Umluft-Strömungssensor (17)
- Außenluft-Strömungssensor
- Abluftgebläse (8)
- Umluftgebläse (9)
- Regelvorrichtung (15)
- Stromversorgung der Sicherheitswerkbank (1),
und das Sicherheitsüberwachungssystem (19) ausgebildet ist, bei einem Ausfall oder einem Defekt wenigstens eines der überwachten Bauteile einen optischen und/oder akustischen Alarm auszugeben.

## Claims

1. A safety workbench (1), comprising a working space (3) enclosed by a housing (2) and with an adjustable working opening with an adjustable front pane (5) for letting in an exterior air flow (7) flowing into the working space (3), an air exhaust fan (8) and a recirculating fan (9) for conveying an air flow (10) in the safety workbench (1), the fans being adapted in such a way that a partial air flow drawn in by the air exhaust fan is blown as an air exhaust flow (12) through an air exhaust filter (11) out of the safety workbench (1) and a partial air flow drawn in by the recirculating fan (9) is blown as a downwardly directed recirculating air flow (14) through a recirculating air filter (13) into the working space (3), and a control unit (15), **characterized in that** a set value for the air exhaust flow and a set value for the recirculating air flow are stored in the control unit (15), and the control unit (15) is adapted to control the output of the air exhaust fan (8) in such a way that the volumes of the air exhaust flow (12) flowing out of the air exhaust filter (11) per unit of time essentially correspond to the set value for the air exhaust flow, and the control unit (15) is further adapted to control the output of the recirculating fan (9) in such a way that the volumes of recirculating air flow (14) leaving the recirculating air filter (13) per unit of time essentially correspond to the set value for the recirculating air flow.

2. A safety workbench according to claim 1, **characterized in that** the air exhaust fan (8) and the recirculating fan (9) are continuously adjustable direct-current fans.

3. A safety workbench according to one of the preceding claims, **characterized in that** an air exhaust flow sensor (16) is arranged for measuring the speed of the air exhaust flow (12) behind the air exhaust filter (11).

4. A safety workbench according to one of the preceding claims, **characterized in that** a recirculating air flow sensor (17) is arranged for measuring the speed of the recirculating air flow (12) behind the recirculating air filter (13).

5. A safety workbench according to one of the preceding claims, **characterized in that** an exterior air flow sensor is arranged for measuring the air entrance speed of the exterior air flow (7) in the area of the working opening (6).

6. A safety workbench according to one of the preceding claims, **characterized in that** it comprises a measuring system (18) for measuring the position of the front pane (5).

7. A safety workbench according to one of the preceding claims, **characterized in that** it comprises at least one measuring device for determining the power consumption and/or the rotation speed of at least one of the air exhaust fan (8) or recirculating fan (9).

8. A safety workbench according to claim 7, **characterized in that** set value ranges for power consumption and/or the speed of air exhaust fan (8) and/or recirculating fan (9) are stored in the control unit (15).

9. A safety workbench according to one of the preceding claims, **characterized in that** the control unit (15) comprises at least one storage medium for storing the set values and a processor for evaluating the measured values sent to the control unit and for comparing them with the stored set values.

10. A safety workbench according to claim 9, **characterized in that** it comprises a safety monitoring system (19) which emits a visual and/or acoustic alarm when the control unit (15) detects a deviation from a stored set value range for the position of the front pane (5).

11. A safety workbench according to claim 9 or 10, **characterized in that** it comprises a safety monitoring system (19) which emits a visual and/or acoustic alarm when the control unit (15) detects a deviation from the stored set value ranges for the power consumption and/or the rotation speed of the air exhaust fan (8) and/or the recirculating fan (9).

12. A safety workbench according to one of the claims 9 to 11, **characterized in that** it comprises a safety monitoring system (19) which emits a visual and/or acoustic alarm when the control unit (15) detects a deviation from a corresponding stored set value range for the flow speed of at least
- the air exhaust flow (12) or
- the recirculating air flow (14) or
- the exterior air flow (7) flowing through the working opening (6).

13. A safety workbench according to one of the preceding claims, **characterized in that** it comprises a safety monitoring system (19) for monitoring the operability of at least one of the following components:
- air exhaust flow sensor (16);
- recirculating air flow sensor (17);
- exterior air flow sensor;
- air exhaust fan (8);
- recirculating fan (9);
- control unit (15);
- power supply of the safety workbench (1);
and the safety monitoring system (19) is adapted to emit a visual and/or acoustic alarm in case of a failure or defect concerning at least one of the monitored components.

## Revendications

1. Enceinte de sécurité (1) avec un espace de travail (3) entouré d'un boîtier (2) avec une ouverture de manipulation réglable (6) situé dans le côté frontal du boîtier (4) et avec une vitre frontale (5) réglable afin de laisser entrer un flux d'air extérieur (7) affluant dans l'espace de travail (3), un ventilateur d'évacuation d'air (8) et un ventilateur de circulation d'air (9) pour convoyer un flux d'air (10) dans l'enceinte de sécurité (1), les ventilateurs étant adaptés de telle façon qu'un flux d'air partiel aspiré par un ventilateur d'évacuation d'air (8) est soufflé à travers un filtre d'évacuation d'air (11) en tant que flux d'air d'évacuation (12) de l'enceinte de sécurité (1) et un flux d'air partiel aspiré par un ventilateur de circulation d'air (9) est soufflé à travers un filtre à circulation d'air (13) en tant que flux d'air de circulation (14) dirigé vers le bas dans l'espace de travail (3), ainsi qu'un dispositif de réglage (15),
**caractérisé en ce qu'**,
une valeur de consigne pour le flux d'air d'évacuation ainsi qu'une valeur de consigne pour le flux d'air de circulation sont enregistrées dans le dispositif de réglage (15) et le dispositif de réglage (15) est adapté pour régler la puissance de convoyage du ventilateur d'évacuation d'air (8) de telle façon que les volumes du flux d'air d'évacuation (12) affluant du filtre d'évacuation d'air (11) par unité de temps corresponde pour l'essentiel à la valeur de consigne du flux d'air d'évacuation et le dispositif de réglage (15) est en outre adapté pour régler la puissance de convoyage du ventilateur de circulation d'air (9) de telle façon que les volumes du flux d'air de circulation (14) sortant du filtre à circulation d'air (13) par unité de temps corresponde pour l'essentiel à la valeur de consigne du flux d'air de circulation.

2. Enceinte de sécurité selon la revendication 1,
**caractérisée en ce que**
le ventilateur d'évacuation d'air (8) et le ventilateur de circulation d'air (9) sont des ventilateurs à courant continu réglables sans gradations.

3. Enceinte de sécurité selon l'une des revendications précédentes,
**caractérisée en ce qu'**
un détecteur de flux d'air d'évacuation (16) est disposé pour mesurer la vitesse du flux d'air d'évacuation (12) derrière le filtre d'évacuation d'air (11).

4. Enceinte de sécurité selon l'une des revendications précédentes,
**caractérisée en ce qu'**
un détecteur de flux d'air de circulation (17) est disposé pour mesurer la vitesse du flux d'air de circulation (14) derrière le filtre à circulation d'air (13).

5. Enceinte de sécurité selon l'une des revendications précédentes,
**caractérisée en ce qu'**
un détecteur de circulation d'air extérieur est disposé pour mesurer la vitesse d'entrée de l'air du flux d'air extérieur (7) dans la vicinité de l'ouverture de manipulation (6).

6. Enceinte de sécurité selon l'une des revendications précédentes
**caractérisée en ce qu'**
elle contient un système de mesure (18) pour mesurer la position de la vitre frontale (5).

7. Enceinte de sécurité selon l'une des revendications précédentes,
**caractérisée en ce qu'**
elle présente au moins un dispositif de mesure pour déterminer la consommation d'électricité et/ou la vitesse de rotation du ventilateur d'évacuation d'air (8) et/ou du ventilateur de circulation d'air (9).

8. Enceinte de sécurité selon la revendication 7,
**caractérisée en ce que**
des gammes de valeurs de consigne pour la consommation d'électricité et/ou la vitesse de rotation du ventilateur d'évacuation d'air (8) et/ou du ventilateur de circulation d'air (9) sont enregistrées dans le dispositif de réglage (15).

9. Enceinte de sécurité selon l'une des revendications précédentes,
**caractérisée en ce que**
le dispositif de réglage (15) présente au moins un support d'enregistrement pour enregistrer les valeurs de consigne et un processeur pour évaluer les valeurs mesurées qui lui ont été transmises et pour les comparer avec les valeurs de consigne enregistrées.

10. Enceinte de sécurité selon la revendication 9,
**caractérisée en ce qu'**
elle présente un système de contrôle de sécurité (19) qui émet un signal visuel et/ou sonore quand le dispositif de réglage (15) constate un écart d'une gamme de valeurs de consigne enregistrée pour la position du vitre frontale (5).

11. Enceinte de sécurité selon la revendication 9 ou 10,
**caractérisée en ce qu'**
elle présente un système de contrôle de sécurité (19) qui émet un signal visuel et/ou sonore quand le dispositif de réglage (15) constate un écart des gammes de valeurs de consigne enregistrées pour la consommation d'électricité et/ou la vitesse de rotation du ventilateur d'évacuation d'air (8) et/ou du ventilateur de circulation d'air (9).

12. Enceinte de sécurité selon l'une des revendications 9 à 11,
**caractérisée en ce qu'**
elle présente un système de contrôle de sécurité (19) qui émet un signal visuel ou sonore quand le dispositif de réglage (15) constate un écart d'une correspondante gamme de valeurs de consigne enregistrée pour la vitesse d'écoulement concernant au moins
- le flux d'air d'évacuation (12) ou
- le flux d'air de circulation (14) ou
- le flux d'air extérieur (7) affluant par l'ouverture de manipulation (6).

13. Enceinte de sécurité selon l'une des revendications précédentes,
**caractérisée en ce qu'**
elle présente un système de contrôle de sécurité (19) pour surveiller le bon fonctionnement d'au moins un des composants suivants :
- détecteur de flux d'air d'évacuation (16)
- détecteur de flux d'air de circulation (17)
- détecteur de flux d'air extérieur
- ventilateur d'évacuation d'air (8)
- ventilateur de circulation d'air (9)
- dispositif de réglage (15)
- alimentation de l'enceinte de sécurité (1) en courant électrique,
et que le système de contrôle de sécurité (19) est adapté pour émettre un signal visuel et/ou sonore en cas de panne ou de dommage concernant au moins un des éléments surveillés.
